(19)

**Europäisches Patentamt**

**European Patent Office**

**Office européen des brevets**

(11) **EP 2 944 592 A1**

(12) **EUROPÄISCHE PATENTANMELDUNG**

(43) Veröffentlichungstag:
**18.11.2015 Patentblatt 2015/47**

(51) Int Cl.:
*B65H 26/02* (2006.01)     *D21G 9/00* (2006.01)
*G01N 21/89* (2006.01)

(21) Anmeldenummer: **15001015.5**

(22) Anmeldetag: **09.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **11.04.2014 DE 102014005347**

(71) Anmelder: **Texmag GmbH Vertriebsgesellschaft 8800 Thalwil (CH)**

(72) Erfinder:
• **Eder, Alfred**
  **86485 Biberbach (DE)**
• **Thomalla, Alexander**
  **86199 Augsburg (DE)**
• **Pittino, Stephan**
  **81249 München (DE)**

(74) Vertreter: **Witzany, Manfred**
  **Patentanwalt**
  **Falkenstrasse 4**
  **85049 Ingolstadt (DE)**

(54) **VERFAHREN UND VORRICHTUNG ZUR INSPEKTION UND ZUR KONFEKTIONIERUNG EINER LAUFENDEN WARENBAHN**

(57) Bei einem Verfahren zur Inspektion und Konfektionierung einer vorgegebenen Stelle einer laufenden Warenbahn (2) befindet sich die laufende Warenbahn (2) zumindest teilweise auf einem Wickler (3). Es werden sowohl eine relative Lauflänge L der Warenbahn (2) als auch ein zugeordneter Drehwinkel $\alpha$ des Wicklers (3) erfasst. Aus diesen Werten wird dann die absolute Lauflänge $L_{TOT}$ der laufenden Warenbahn (2) berechnet. Eine Kamera (34) erfasst die laufende Warenbahn (2). Der Kamerawert wird mit einem Sollwert (35) verglichen und zusammen mit der absoluten Lauflänge $L_{TOT}$ der laufenden Warenbahn (2) in einer Datei (37) gespeichert. Zu einem späteren Zeitpunkt werden mit Hilfe der Datei (37) die fehlerhaften Stellen der laufenden Warenbahn (2) angefahren. Dabei wird die absolute Lauflänge $L_{TOT}$ erneut bestimmt und mit der Datei (37) verglichen. Damit können die fehlerhaften Stellen leicht aus der laufenden Warenbahn (2) herausgetrennt werden.

EP 2 944 592 A1

**Beschreibung**

Die Erfindung betrifft ein Verfahren zur Inspektion und zur Konfektionierung einer laufenden Warenbahn, wobei sich die Warenbahn wenigstens teilweise auf einem Wickler befindet.

Bei der Inspektion einer laufenden Warenbahn müssen fehlerhafte Stellen der laufenden Warenbahn erkannt und in geeigneter Form gespeichert werden, damit sie beim anschließenden Konfektioniervorgang angefahren und aus der Warenbahn herausgetrennt werden können. Dies wird bei bekannten Inspektionsverfahren durch Markieren der laufenden Warenbahn mit entsprechenden Markierungen gemacht, so dass die absolute Position der fehlerhaften Stellen eindeutig bestimmbar ist. Im folgenden Konfektionierungsvorgang müssen dann diese Markierungen ausgewertet werden. Damit wird jedoch ein Teil der Warenbahn für die Markierungen benötigt, der somit zusätzlichen Abfall generiert. Außerdem muss für die Markierungen gegebenenfalls ein zusätzliches Applikations- oder Druckwerk eingerichtet werden, was platz- und kostenaufwendig ist. Es ist daher grundsätzlich wünschenswert, die Information über fehlerhafte Stellen der laufenden Warenbahn nicht auf der Warenbahn selbst sondern in einer der Warenbahn zugeordneten Datei zu führen. Damit muss aber eine eindeutige Zuordnung der im Inspektionsverfahren ermittelten fehlerhaften Stellen zu dem jeweiligen Abschnitt der laufenden Warenbahn gegeben sein. Hierzu ist es erforderlich, die absolute Lauflänge der laufenden Warenbahn zu ermitteln.

Es ist bekannt, die relative Lauflänge einer laufenden Warenbahn mittels eines Laufrades zu bestimmen, welches mit der Warenbahn in Kontakt ist. Aus der Anzahl der Umdrehungen dieses Laufrades und dem bekannten Laufraddurchmesser kann dann recht genau die relative Lauflänge der Warenbahn bestimmt werden. Dies ist insbesondere im Bereich von Druckmaschinen von erheblicher Bedeutung, um beispielsweise die exakte Lage von Drucknutzen zu ermitteln und die Warenbahn exakt zwischen zwei Nutzen zu durchtrennen.

Bedingt durch fehlerhafte Druckbilder, fehlerhafte Stellen der Warenbahn oder andere Fehlerquellen kommt es jedoch immer wieder vor, dass verschiedene Bereiche der Warenbahn - insbesondere Schlechtware - auszuscheiden ist. Für diese Aufgabe ist jedoch die relative Lauflängenbestimmung nicht ausreichend. Wird zum Beispiel unkontrolliert Material ausgeschnitten, können mit der relativen Lauflängenbestimmung Folgefehler nicht mehr exakt platziert werden. Die Positionen der Fehler ließen sich dann nicht mehr rekonstruieren. Es ist vielmehr erforderlich, die absolute Lauflänge, also den Abstand einer vorgegebenen, aktuellen Position der laufenden Warenbahn beispielsweise von einer Anfangskante zu bestimmen. Nur auf diese Weise können zuverlässig die als fehlerhaft erkannten und beanstandeten Bereiche der Warenbahn aus dem weiteren Prozess ausgeschieden werden. Zur Lösung dieses Problems wird üblicherweise eine Kodierung auf die Warenbahn aufgebracht, die die Lauflänge beispielsweise in Vielfachen der Nutzenlänge kodiert. Diese Maßnahme führt aber wiederum zu zusätzlicher Makulatur, da die Kodierung einen Teil der Warenbahn beansprucht. Schließlich ist es recht unwahrscheinlich, dass bei einem fehlerhaften Druck die zeitnah aufgebrachte Lauflängenkodierung korrekt und lesbar ist.

Aus der DE 10 2009 029 083 A1 ist ein gattungsgemäßes Verfahren zur Inspektion einer laufenden Warenbahn bekannt. Dabei wird eine Faserbahn auf eine Wickelrolle aufgerollt und der dabei erzielte Rollendurchmesser berührungslos gemessen. Zusätzlich wird der Drehwinkel der Wickelrolle gemessen, um hieraus die absolute Position der Warenbahn zu ermitteln. Anhand dieser absoluten Position werden zu einem späteren Zeitpunkt fehlerhafte Stellen der Warenbahn herausgeschnitten. Dieses Verfahren hat sich in der Praxis bewährt und bildet den Ausgangspunkt der vorliegenden Erfindung.

Der Erfindung liegt daher die Aufgabe zugrunde, ein Verfahren der eingangs genannten Art zu schaffen, welches eine Inspektion und eine Konfektionierung der laufenden Warenbahn ohne Anbringen einer Markierung und/oder Kodierung ermöglicht. Außerdem soll eine Vorrichtung zur Durchführung dieses Verfahrens geschaffen werden.

Diese Aufgabe wird erfindungsgemäß mit den folgenden Merkmalen gelöst.

Bei einem Verfahren zur Inspektion einer laufenden Warenbahn werden Abschnitte der laufenden Warenbahn mit mindestens einem Bild gebenden Verfahren erfasst. Dabei ist insbesondere an eine Kamera gedacht. Das Inspektionsverfahren ist jedoch nicht auf Kameras beschränkt. Mindestens ein vom Bild gebenden Verfahren gewonnener Wert wird dabei mit mindestens einem Sollwert verglichen und das Vergleichsergebnis in mindestens einer Datei gespeichert. Der mindestens eine aus dem Kamerabild gewonnene Wert ist eine beliebige, vom Kamerabild abgeleitete Größe. Beispielsweise könnte dieser Wert die Lage einer Kante, die Fourier-Transformation des Kamerabildes, eine über einen bestimmten Bereich der Warenbahn gemittelte Helligkeit oder Farbinformation, die Grauwertinformation der einzelnen Pixel oder auch das originäre Kamerabild selbst sein. Diese Aufzählung ist lediglich beispielhaft und nicht abschließend zu verstehen. Der mindestens eine Sollwert repräsentiert die gewünschte Größe des mindestens einen Wertes und kann ein Skalar, vektorieller oder tensorieller Wert sein. Auf jeden Fall wird der mindestens eine Sollwert passend zum mindestens einen Wert gewählt. Der Vergleich kann Toleranzgrößen wie relative Verschiebungen, Drehungen oder Ähnliches enthalten. Der Vergleich dient insbesondere dazu, fehlerhafte Abschnitte der Warenbahn zu erkennen, um diese zu einem späteren Zeitpunkt aus dem Produktionsprozess anfahren und/oder ausscheiden zu können. Um später den fehlerhaften Abschnitt innerhalb der Warenbahn wieder genau identifizieren und anfahren zu können, wird zusätzlich die absolute Lauflänge der Warenbahn ermittelt und zusammen mit dem Vergleichsergebnis in der mindestens einen Datei gespeichert. Da auf diese Weise die Zuordnung des Vergleichsergebnisses zu den jeweiligen Abschnitten der Warenbahn eindeutig gegeben ist, kann von einer Kodierung oder gesonderten Markierung der Warenbahn abgesehen werden. Damit kann die gesamte Warenbahn genutzt werden, ohne zusätzlichen Ausschuss zu erzeugen. Außerdem muss für eine mögliche Anbringung einer Kodierung oder einer Ausschussmarkierung kein zusätzliches Druckwerk oder Ähnliches in die Produktionsstraße integriert werden. Die Inspektion ist damit wesentlich flexibler handhabbar und leichter in bestehende Produktionsstraßen integrierbar.

Zum Erfassen der absoluten Lauflänge einer vorgegebenen Stelle einer laufenden Warenbahn wird die relative Lauflänge der laufenden Warenbahn erfasst. Wenigstens ein Teil der laufenden Warenbahn ist dabei auf einem Wickler aufgewickelt, wobei zusätzlich der der relativen Lauflänge zugeordnete Drehwinkel des Wicklers erfasst wird. Der Begriff der "Zuordnung" zweier Größen ist dabei derart zu verstehen, dass abgesehen von möglichen Proportionalitätsfaktoren und additiven Konstanten beide Größen für dasselbe Bahnstück erfasst werden. Damit sind beide Größen, also die relative Lauflänge einerseits und der Drehwinkel des Wicklers andererseits auf dasselbe Bahnstück bezogen, so dass hieraus die absolute Lauflänge der Warenbahn berechnet werden kann. Dabei wird die Tatsache ausgenutzt, dass die Lauflänge der laufenden Warenbahn bei jeder Umdrehung des Wicklers um einen bestimmten Drehwinkel umso größer ist, je mehr Lagen sich auf dem Wickler befinden. Damit kann aus der Kenntnis der relativen Lauflänge und des diesem zugeordneten Drehwinkels des Wicklers ohne auf der laufenden Warenbahn vorgesehenen Markierungen oder Kodierungen die absolute Lauflänge, also die aktuelle Position bezogen auf eine feste Bezugsgröße der Warenbahn, beispielsweise den Bahnanfang, berechnet werden.

Bei einem Verfahren zur Konfektionierung einer laufenden Warenbahn wird bis auf die Tatsache, dass die Warenbahn nunmehr abgewickelt wird, die absolute Lauflänge der laufenden Warenbahn in gleicher Weise, wie oben beschrieben, ermittelt und mit den in der mindestens einen Datei gespeicherten Lauflängenwerten verglichen. Auf diese Weise kann die Information zurückgewonnen werden, welche Abschnitte der laufenden Warenbahn fehlerhaft sind, um diese anzufahren und/oder aus der laufenden Warenbahn herauszutrennen.

Es stellt sich heraus, dass das Verhältnis zwischen der relativen Lauflänge der Warenbahn und dem zugeordneten Drehwinkel bis auf eine additive Konstante eine lineare Funktion der Anzahl der auf dem Wickler aufgewickelten Lagen der laufenden Warenbahn ist. Damit reicht das Verhältnis der relativen Lauflänge und dem zugeordneten Drehwinkel aus, um hieraus die absolute Lauflänge der Warenbahn zu bestimmen.

Zur einfachen technischen Realisierung und insbesondere Verringerung des Rechenaufwandes ist es vorteilhaft, wenn die relative Lauflänge der Warenbahn für einen bestimmten, vorgegebenen Drehwinkel des Wicklers ermittelt wird. Damit ist der Drehwinkel, der der jeweils gemessenen Lauflänge zugeordnet wird, eine vorgegebene und damit bekannte Konstante. Damit reduziert sich die Erfassung des Drehwinkels des Wicklers auf die Erzeugung eines Triggersignals, welches bei bestimmten Drehwinkeln des Wicklers ausgelöst wird. Dieses Triggersignal startet und stoppt dabei die Messung der relativen Lauflänge der Warenbahn, so dass die Zuordnung dieser Messwerte zu dem jeweiligen Drehwinkel des Wicklers bereits von selbst erfüllt ist.

Eine weitere Vereinfachung ergibt sich, wenn der vorgegebene Drehwinkel ein ganzzahliges Vielfaches von $2\pi$ ist. Vorzugsweise ist der vorgegebene Drehwinkel $2\pi$, so dass die relative Lauflänge jeweils für eine vollständige Umdrehung des Wicklers ermittelt wird. Auf diese Weise reicht es aus, den Wickler mit einem einzigen Geber auszurüsten, der bei jeder Umdrehung einen Trigger auslöst. Durch zusätzliches Unterdrücken einzelner Triggersignale kann der vorgegebene Drehwinkel auch auf ein Vielfaches von $2\pi$ eingestellt werden.

Zur Erzielung einer einfachen und damit schnellen Berechnung der absoluten Lauflänge ist es vorteilhaft, wenn die Anzahl der auf dem Wickler befindlichen Lagen N nach folgender Formel berechnet wird:

$$N = \frac{L/\alpha - R}{S}$$

Dabei bedeutet R den Wicklerradius, S die Dicke der Warenbahn und L die gemessene relative Lauflänge für eine Drehung des Wicklers um den Winkel $\alpha$ in Radiant. Auf diese Weise kann die Zahl der auf dem Wickler befindlichen Lagen sehr einfach berechnet werden, was dann die Berechnung der absoluten Lauflänge erleichtert. Gegebenenfalls kann die Anzahl N der auf dem Wickler befindlichen Lagen auch unmittelbar als absolute Lauflänge interpretiert werden. Dieser Wert ist aber aufgrund der Abhängigkeit der relativen Lauflänge von der Anzahl der Lagen N nicht metrisch, was aber in vielen Fällen tolerierbar ist.

Ist eine metrische Ermittlung der absoluten Lauflänge erforderlich, so kann diese sehr einfach durch folgende Formel berechnet werden:

$$L_{TOT} = \alpha \left( RN + S \frac{N(N+1)}{2} \right) + L_0$$

Dabei bedeutet $L_0$ eine beliebige Konstante, die frei wählbar ist. Diese Berechnung trägt dem Umstand Rechnung, dass jede weitere Lage N etwas mehr zur absoluten Lauflänge beiträgt als die darunterliegende Lage $N$-1. Auf diese Weise kann exakt angegeben werden, wo sich eine bestimmte Position - beispielsweise bezogen auf den Bahnanfang - auf der Warenbahn befindet. Hierzu ist weder eine Markierung oder Kodierung und eine relative Lauflängenerfassung erforderlich. Bei Fehlern egal welcher Art lässt sich die absolute Lauflänge auch mitten im Prozess jederzeit ermitteln.

Zur Durchführung des Verfahrens zur Inspektion einer laufenden Warenbahn hat sich eine Vorrichtung bewährt, die mindestens einen Wickler aufweist. Die Warenbahn ist dabei auf dem mindestens einen Wickler wenigstens teilweise aufgewickelt. Im mindestens einen Wickler ist mindestens ein die relative Lauflänge ermittelnder erster Geber nachgeordnet. Außerdem ist dem mindestens einen Wickler mindestens eine von dessen Rotation beeinflusster zweiter Geber zugeordnet. Der mindestens eine erste Geber und der mindestens eine zweite Geber stehen dabei mit mindestens einer Rechenschaltung in Wirkverbindung, um die absolute Lauflänge an vorgegebener Stelle der laufenden Warenbahn zu ermitteln. Diese Rechenschaltung gibt die absolute Lauflänge als Wert aus, wobei es unerheblich ist, ob dieser Wert in digitaler oder analoger Form repräsentiert wird. Die Vorrichtung weist außerdem mindestens eine Kamera auf, die die laufende Warenbahn erfasst. Mindestens ein Vergleicher vergleicht mindestens einen aus dem Bild der mindestens einen Kamera erfassten Wert mit einem Sollwert, um aus Abweichungen ein Signal zu berechnen, welches anzeigt, ob die untersuchte Stelle der laufenden Warenbahn fehlerhaft ist oder nicht. Dieses Signal wird zusammen mit der ermittelten absoluten Lauflänge der Warenbahn in einer entsprechenden Datei abgelegt, die der Warenbahn zugeordnet ist. Damit kann, ohne die Warenbahn selbst zu markieren oder kodieren, anhand dieser Datei ermittelt werden, wo sich in der Warenbahn fehlerhafte Stellen befinden, die in einem späteren Vorgang angefahren und/oder herausgetrennt werden.

Eine Vorrichtung zur Durchführung des Verfahrens zur Konfektionierung einer laufenden Warenbahn ist bezüglich der Erfassung der absoluten Lauflänge gleich zur Vorrichtung zur Durchführung des Verfahrens zu Inspektion der laufenden Warenbahn ausgebildet. Eine Kamera und der Vergleicher sind jedoch bei dieser Vorrichtung überflüssig, da die Datei mit den Lauflängeninformationen der fehlerhaften Stellen der laufenden Warenbahn bereits vorhanden und der laufenden Warenbahn zugeordnet ist. Diese Vorrichtung weist einen weiteren Vergleicher auf, der die Lauflängeninformationen der Datei mit der berechneten absoluten Lauflänge vergleicht. Auf diese Weise wird ermittelt, wann eine fehlerhafte Stelle der laufenden Warenbahn beginnt. Dieser Vergleicher steht mit mindestens einem Antrieb und/oder mindestens einer Trennvorrichtung in Wirkverbindung. Der mindestens eine Antrieb beeinflusst dabei die Geschwindigkeit der laufenden Warenbahn, so dass fehlerhafte Stellen der Warenbahn angefahren werden können. Damit lässt sich der Beginn bzw. das Ende der fehlerhaften Stellen exakt anfahren und beispielsweise manuell heraustrennen. Der mindestens eine Antrieb kann den Wickler antreiben, dies ist jedoch nicht unbedingt erforderlich. Alternativ oder zusätzlich löst das Signal des Vergleichers automatisch den Trennvorgang aus, um den jeweiligen schadhaften Bereich aus der laufenden Warenbahn herauszutrennen.

Vorzugsweise ist der mindestens eine zweite Geber derart ausgebildet, dass er mindestens ein Triggersignal erzeugen kann, das Start und/oder Ende der Lauflängenerfassung des mindestens einen ersten Gebers steuert. Das vereinfacht nicht nur den Aufwand in der Rechenschaltung, sondern ermöglicht einen überraschend einfachen Aufbau der Sensoren. Statt eines komplizierten Winkelgebers kann der mindestens eine zweite Geber als einfacher Pulsgeber, beispielsweise mittels einer Lichtschranke oder einem Näherungsschalter realisiert werden.

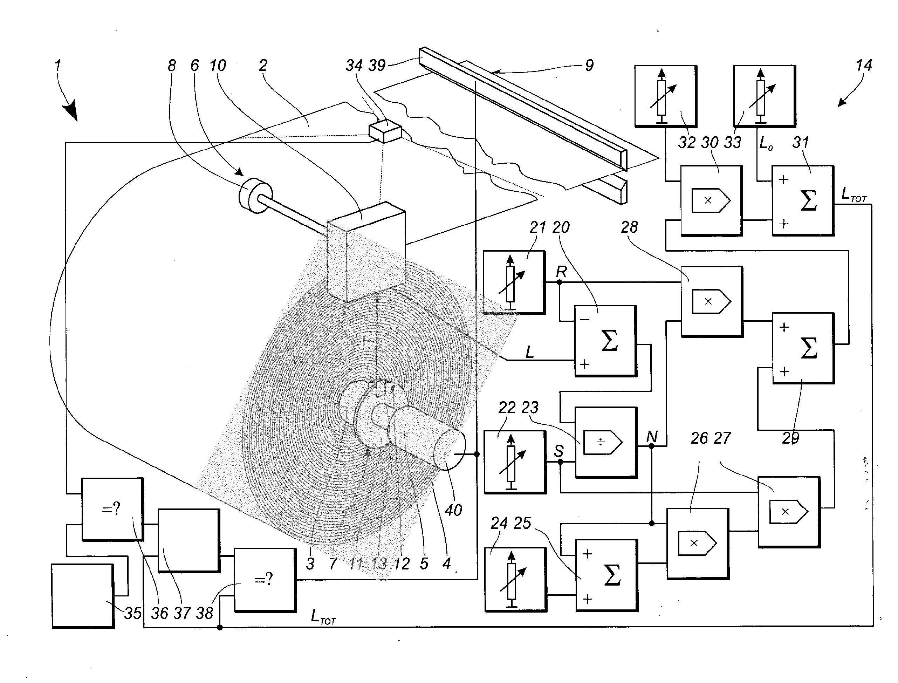

Der Erfindungsgegenstand wird beispielhaft anhand der Zeichnung erläutert, ohne den Schutzumfang zu beschränken.

Die einzige Figur zeigt eine räumliche Prinzipdarstellung einer Vorrichtung mit einer als Schaltplan dargestellten Rechenschaltung.

Eine Vorrichtung 1 dient sowohl zur Inspektion als auch zur Konfektionierung einer laufenden Warenbahn 2. Die Warenbahn 2 ist dabei teilweise auf einem Wickler 3 aufgewickelt und auf diesem in verschiedenen Lagen 4 übereinander angeordnet. Der Wickler 3 ist um eine Achse 5 drehbar angeordnet und wird von einem Antrieb so zur Drehung angetrieben. Die Achse 5 kann auch mit einem Antrieb 40 oder einer nicht dargestellten Bremsvorrichtungen in Wirkverbindung stehen und drehmomentübertragend ausgebildet sein. Dies ist jedoch nicht erforderlich.

Der Wickler 3 steht mit einem ersten Geber 6 und einem zweiten Geber 7 in Wirkverbindung. Der erste Geber 6 weist mindestens ein Laufrad 8 auf, welches reibschlüssig mit der Warenbahn 2 in Wirkverbindung steht. Dieses Laufrad 8 erfasst eine relative Lauflänge $L$ der Warenbahn 2. Dies bedeutet, dass mittels des Laufrades 8 zwar Laufwegdifferenzen eindeutig und präzise bestimmbar sind, die absolute Lauflänge $L_{TOT}$ beginnend von einem Anfang 9 der Warenbahn 2 oder einer geeigneten Referenz lässt sich mit dem ersten Geber 6 jedoch nicht erfassen. Der erste Geber 6 weist einen Umformer 10 auf, der die vom Laufrad 8 abgetastete Bewegung der Warenbahn 2 in ein elektrisches Signal umwandelt, welches der relativen Lauflänge $L$ der Warenbahn 2 entspricht.

Der zweite Geber 7 weist eine Scheibe 11 auf, in der ein Schlitz 12 vorgesehen ist. Diese Scheibe 11 wird von einer Gabellichtschranke 13 abgetastet. Diese Gabellichtschranke 13 erzeugt einen Trigger $T$, der dem Umformer 10 als Start-Stop-Signal zugeführt wird. Damit wird erreicht, dass der erste Geber 6 eine Lauflängenmessung stets nach einer vollen Umdrehung des Wicklers 3 abschließt und als relative Lauflänge $L$ bezogen auf eine Umdrehung abgibt.

Dem ersten Geber 6 ist eine Rechenschaltung 14 nachgeordnet, die im Folgenden im Detail erläutert wird. Das Signal der relativen Lauflänge $L$ wird einem Summierer 20 nicht invertierend zugeführt. Ein einstellbarer Wertgeber 21 wird auf den Wicklerradius R eingestellt und steht invertierend mit dem Summierer 20 in Wirkverbindung. Ein weiterer Wertgeber 22 wird auf einen Wert eingestellt, der die Dicke S der Warenbahn 2 repräsentiert. Der Wertgeber 22 steht zusammen mit dem Summierer 20 mit einem Dividierer 23 in Wirkverbindung. Dieser Dividierer 23 ermittelt die Anzahl der auf dem Wickler 3 befindlichen Lagen $N$.

Ein dritter Wertgeber 24 steht zusammen mit dem Dividierer 23 mit einem weiteren Summierer 25 in nicht invertierender Wirkverbindung. Der dritte Wertgeber 24 wird dabei auf einen Wert eingestellt, der einer Lage des Ausgangssignals des Dividierers 23 entspricht. Der Dividierer 23 und der Summierer 25 stehen mit einem Mulitplizierer 26 in Wirkverbindung. Dieser steht ausgangsseitig zusammen mit dem Wertgeber 22 mit einem weiteren Multiplizierer 27 in Wirkverbindung. Der Dividierer 23 steht zusammen mit dem Wertgeber 21 mit einem Multiplizierer 28 in Wirkverbindung. Beide Multiplizierer 27, 28 speisen einen Summierer 29 in nicht invertierender Weise. Ein Ausgangssignal des Summierers 29 steht mit einem Multiplizierer 30 und einem Summierer 31 in Wirkverbindung. Diese werden von Wertgebern 32, 33 beeinflusst, die das Ausgangssignal des Summierers 29 proportional verstärken und mit einem vorgegebenen Offset belegen.

Ein Ausgangssignal $L_{TOT}$ des Summierers 31 gibt dann die absolute Lauflänge $L_{TOT}$ der Warenbahn 2 an. Hierzu ist insbesondere keinerlei Markierung oder Kodierung auf der Warenbahn 2 erforderlich. Die Berechnung der absoluten Lauflänge $L_{TOT}$ ist auch unabhängig von eventuellen Störungen oder Fehlern, so dass die Ermittlung der absoluten Lauflänge $L_{TOT}$ nicht davon abhängig ist, dass die relative Lauflänge $L$ durch den ersten Geber 6 zuverlässig und kontinuierlich vom Anfang 9 der Warenbahn 2 erfasst wird.

Zur Inspektion der laufenden Warenbahn 2 ist eine Kamera 34 vorgesehen, die die Warenbahn 2 optisch abtastet. Ein Wert der Kamera 34 wird zusammen mit einem Sollwert 35 einem Vergleicher 36 zugeführt. Dieser Vergleicher 36 prüft, ob die ermittelten Abweichungen zwischen beiden innerhalb einer vorgegebenen Toleranz liegen. In diesem Fall gibt der Vergleicher 36 ein inaktives Ausgangssignal ab. Liegen die Unterschiede außerhalb des vorgegebenen Toleranzbereichs, gibt der Vergleicher 36 ein aktives Ausgangssignal ab. Welche konkreten Unterschiede zwischen dem Wert und dem Sollwert 35 ein inaktives bzw. aktives Ausgangssignal liefen sollen, hängt vom jeweiligen Anwendungsfall ab, wobei verschiedene Fehlerarten auch unterschiedlich gewichtet werden können. So spielt beispielsweise bei einer strukturierten Warenbahn ein Versatz eines sich wiederholenden Druckmusters praktisch keine Rolle und kann daher recht großzügig toleriert werden. Eine Störung im Druckmuster oder Farbfehler sind allerdings wesentlich weniger tolerierbar, da sie spätere Arbeitsprozesse erheblich beeinträchtigen.

Das Ausgangssignal des Vergleichers 36 wird zusammen mit der ermittelten absoluten Lauflänge $L_{TOT}$ in einer Datei 37 abgelegt, die der laufenden Warenbahn 2 eindeutig zugeordnet wird.

Zur Konfektionierung der laufenden Warenbahn wird die Vorrichtung zur absoluten Lauflängenmessung in unveränderter Weise eingesetzt. Statt der Kamera 34 und dem Vergleicher 36 wird dagegen ein Vergleicher 38 eingesetzt, der die bereits im Inspektionsverfahren abgelegte Datei 37 mit der berechneten Lauflänge $L_{TOT}$ vergleicht. In der Datei 37 sind absolute Lauflängen, die Anfang und Ende von fehlerhaften Stellen der laufenden Warenbahn 2 kennzeichnen, abgelegt. Durch Vergleich dieser abgespeicherten Lauflängen mit der aktuell berechneten absoluten Lauflänge $L_{TOT}$ im Vergleicher 38 wird ein Signal erzeugt, welches damit den Beginn bzw. das Ende einer fehlerhaften Stelle der laufenden Warenbahn 2 anzeigt. Dieses Signal plaziert die Warenbahn 2 korrekt zur Trennvorrichtung 39. Zu diesem Zweck wird das Signal des Vergleichers 38 dem Antrieb 40 zugeführt, der unter der Kontrolle des Signals die Warenbahn 2 so ausrichtet, dass der Beginn und/oder das Ende der fehlerhaften Stelle korrekt zur Trennvorrichtung 39 ausgerichtet ist. Der Antrieb 40 arbeitet dabei als Servoantrieb. Außerdem kann das Signal auch die Trennvorrichtung 39 betätigen, um fehlerhafte Stellen aus der Warenbahn 2 zu entfernen. Alternativ kann die Betätigung der Trennvorrichtung 39 bzw. das Heraustrennen auch manuell erfolgen.

Es ist insbesondere daran gedacht, die Vorrichtung 1 auch derart auszubilden, dass sie nur die Komponenten für die Inspektion oder nur die

Komponenten für die Konfektionierung enthält, da der Inspektions- und Konfektionierungsvorgang in der Regel zu völlig unterschiedlichen Zeiten und an weit auseinander liegenden Orten durchgeführt werden müssen. In diesem Fall muss lediglich dafür gesorgt werden, dass die Datei 37 der jeweiligen laufenden Warenbahn 2 exakt zugeordnet bleibt und zum richtigen Zeitpunkt der Vorrichtung 1 zum Konfektionieren der laufenden Warenbahn 2 zugeführt wird.

**Bezugszeichenliste**

| | | | |
|---|---|---|---|
| 1 | Vorrichtung | 36 | Vergleicher |
| 2 | Warenbahn | 37 | Datei |
| 3 | Wickler | 38 | Vergleicher |
| 4 | Lage | 39 | Trennvorrichtung |
| 5 | Achse | 40 | Antrieb |
| 6 | erster Geber | $L$ | relative Lauflänge |
| 7 | zweiter Geber | T | Trigger |
| 8 | Laufrad | $R$ | Wicklerradius |
| 9 | Anfang | $N$ | Anzahl der Lagen |
| 10 | Umformer | $L_{TOT}$ | absolute Lauflänge |
| 11 | Scheibe | | |
| 12 | Schlitz | | |
| 13 | Gabellichtschranke | | |
| 14 | Rechenschaltung | | |
| 20 | Summierer | | |
| 21 | Wertgeber | | |
| 22 | Wertgeber | | |
| 23 | Dividierer | | |
| 24 | Wertgeber | | |
| 25 | Summierer | | |
| 26 | Multiplizierer | | |
| 27 | Multiplizierer | | |
| 28 | Multiplizierer | | |
| 29 | Summierer | | |
| 30 | Multiplizierer | | |
| 31 | Summierer | | |
| 32 | Wertgeber | | |
| 33 | Wertgeber | | |
| 34 | Kamera | | |
| 35 | Sollwert | | |

**Patentansprüche**

1. Verfahren zur Inspektion einer laufenden Warenbahn (2), die sich wenigstens teilweise auf einem Wickler (3) befindet, bei dem Abschnitte der Warenbahn (2) mit mindestens einem Bild gebenden Verfahren erfasst und mindestens ein daraus gewonnener Wert mit mindestens einem Sollwert verglichen wird, wobei die absolute Lauflänge $L_{TOT}$ des erfassten Abschnittes der Warenbahn (2) aus einer relativen Lauflänge L der Warenbahn (2) und einem der relativen Lauflänge L zugeordneten Drehwinkel $\alpha$ des Wicklers (3) berechnet wird, wobei ein Vergleichsergebnis zwischen dem mindestens einen Wert und dem mindestens einem Sollwert (35) zusammen mit der absoluten Lauflänge in mindestens einer Datei (37) gespeichert wird, **dadurch gekennzeichnet, dass** das Verhältnis zwischen der relativen Lauflänge L der Warenbahn (2) und dem zugeordneten Drehwinkel $\alpha$ des Wicklers (3) berechnet wird.

2. Verfahren zur Konfektionierung einer laufenden Warenbahn (2), welche mit dem Verfahren nach Anspruch 1 inspiziert wurde, die sich wenigstens teilweise auf einem Wickler (3) befindet, bei dem eine absolute Lauflänge $L_{TOT}$ der laufenden Warenbahn (2), aus einer relativen Lauflänge L der Warenbahn (2) und einem der relativen Lauflänge L zugeordneten Drehwinkel $\alpha$ des Wicklers (3) berechnet wird, und mit der mindestens einen Datei (37) verglichen wird, wobei Abschnitte der Warenbahn (2), die in der mindestens einen Datei als fehlerhaft gekennzeichnet sind, angefahren und/oder aus der Warenbahn (2) herausgetrennt werden, **dadurch gekennzeichnet, dass** das Verhältnis zwischen der relativen Lauflänge L der Warenbahn (2) und dem zugeordneten Drehwinkel $\alpha$ des Wicklers (3) berechnet wird.

3. Verfahren nach Anspruch 1 oder 2, **dadurch gekennzeichnet, dass** die relative Lauflänge L der Warenbahn (2) für einen bestimmten, vorgegebenen Drehwinkel α des Wicklers (3) ermittelt wird.

4. Verfahren nach Anspruch 3, **dadurch gekennzeichnet, dass** für den vorgegebenen Drehwinkel α ein ganzzahliges Vielfaches von $2\pi$, gemessen in Radiant gewählt wird.

5. Verfahren nach Anspruch 4, **dadurch gekennzeichnet, dass** die Anzahl der Lagen N auf dem Wickler (3) nach folgender Formel berechnet wird:

$$N = \frac{L/\alpha - R}{S}$$

wobei R dem Wicklerradius, S der Dicke der Warenbahn (2) und L der gemessenen relativen Lauflänge L für eine Drehung des Wicklers (3) um den Winkel α entspricht.

6. Verfahren nach Anspruch 5, **dadurch gekennzeichnet, dass** die absolute Lauflänge $L_{TOT}$ der Warenbahn (2) bis zu einer vorgegebenen Stelle aus der Lagenanzahl N gemäß folgender Formel berechnet wird:

$$L_{TOT} = \alpha\left(RN + S\frac{N(N+1)}{2}\right) + L_0$$

wobei $L_0$ eine beliebige Konstante ist.

7. Vorrichtung zur Durchführung des Verfahrens nach mindestens einem der Ansprüche 1 und 3 bis 6, wobei die Vorrichtung (1) mindestens einen Wickler (3) aufweist, auf den die mindestens eine Warenbahn (2) wenigstens teilweise aufwickelbar ist, wobei dem mindestens einen Wickler (3) mindestens ein erster Geber zur Ermittlung der relativen Lauflänge nachgeordnet ist, **dadurch gekennzeichnet, dass** dem mindestens einen Wickler (3) mindestens ein von dessen Rotation beeinflusster zweiter Geber (7) zugeordnet ist, wobei der mindestens eine erste Geber (6) und der mindestens eine zweite Geber (7) mit mindestens einer Rechenschaltung (14) in Wirkverbindung stehen, um die absolute Lauflänge $L_{TOT}$ der vorgegebenen Stelle der laufenden Warenbahn (2) zu ermitteln, wobei die laufende Warenbahn (2) von mindestens einer Kamera (34) erfasst ist, welche mit mindestens einem Vergleicher (36) in Wirkverbindung steht, der mindestens einen von der Kamera (34) erfasste Wert mit mindestens einem Sollwert (35) vergleicht und der mindestens eine Vergleicher (36) mit mindestens einer Datei (37) in Wirkverbindung steht, in der ein Vergleichsergebnis des Vergleichers (36) zusammen mit der berechneten absoluten Lauflänge $L_{TOT}$ der vorgegebenen Stelle der laufenden Warenbahn (2) abgelegt ist.

8. Vorrichtung zur Durchführung des Verfahrens nach mindestens einem der Ansprüche 2 bis 6, wobei die Vorrichtung (1) mindestens einen Wickler (3) aufweist, auf den die mindestens eine Warenbahn (2) wenigstens teilweise auf- und/oder abwickelbar ist, wobei dem mindestens einen Wickler (3) mindestens ein erster Geber (6) zur Ermittlung der relativen Lauflänge nachgeordnet ist, **dadurch gekennzeichnet, dass** dem mindestens einen Wickler (3) mindestens ein von dessen Rotation beeinflusster zweiter Geber (7) zugeordnet ist, wobei der mindestens eine erste Geber (6) und der mindestens eine zweite Geber (7) mit mindestens einer Rechenschaltung (14) in Wirkverbindung stehen, um die absolute Lauflänge $L_{TOT}$ der vorgegebenen Stelle der laufenden Warenbahn (2) zu ermitteln, wobei eine Datei (37) vorgesehen ist, in der ermittelte fehlerhafte Stellen der Warenbahn über ihre absolute Lauflänge $L_{TOT}$ gespeichert sind, wobei die Datei (37) mit einem weiteren Vergleicher (38) in Wirkverbindung steht, der gespeicherte absolute Lauflängen mit der ermittelten Lauflänge $L_{TOT}$ vergleicht und in Abhängigkeit vom Vergleichsergebnis mindestens einen die Warenbahngeschwindigkeit beeinflussenden Antrieb (40) und/oder mindestens eine Trennvorrichtung (39) ansteuert.

9. Vorrichtung nach Anspruch 7 oder 8, **dadurch gekennzeichnet, dass** der mindestens eine zweite Geber (7) Trigger T erzeugt, die einen Start und/oder ein Ende der Lauflängenerfassung des mindestens einen ersten Gebers (6) steuern.

EP 2 944 592 A1

Europäisches
Patentamt

European
Patent Office

Office européen
des brevets

## EUROPÄISCHER RECHERCHENBERICHT

Nummer der Anmeldung

EP 15 00 1015

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2009 029083 A1 (VOITH PATENT GMBH [DE]) 3. März 2011 (2011-03-03) * Absätze [0003] - [0004], [0011], [0019], [0030] - [0038], [0042] - [0044] * * Abbildungen 1a,1b * ----- | 1-9 | INV. B65H26/02 D21G9/00 G01N21/89 |
| X | DE 10 2009 029082 A1 (VOITH PATENT GMBH [DE]) 3. März 2011 (2011-03-03) * Absätze [0026] - [0030] * * Abbildung 1 * ----- | 1-9 | |
| X | JP S64 87460 A (MEISAN KK) 31. März 1989 (1989-03-31) * Zusammenfassung * * Abbildungen 1,2 * ----- | 1-9 | |

RECHERCHIERTE SACHGEBIETE (IPC)

B65H
D21G
G01N

Der vorliegende Recherchenbericht wurde für alle Patentansprüche erstellt

| Recherchenort | Abschlußdatum der Recherche | Prüfer |
|---|---|---|
| Den Haag | 5. Oktober 2015 | Cescutti, Gabriel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 1015

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2015

| Im Recherchenbericht angeführtes Patentdokument | Datum der Veröffentlichung | Mitglied(er) der Patentfamilie | Datum der Veröffentlichung |
|---|---|---|---|
| DE 102009029083 A1 | 03-03-2011 | DE 102009029083 A1<br>WO 2011026692 A1 | 03-03-2011<br>10-03-2011 |
| DE 102009029082 A1 | 03-03-2011 | KEINE | |
| JP S6487460 A | 31-03-1989 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102009029083 A1